# EUROPEAN PATENT SPECIFICATION

(11) **EP 3 021 981 B1**
(45) Date of publication and mention of the grant of the patent: **04.09.2019**
(21) Application number: 14825905.4
(22) Date of filing: 18.07.2014
(51) Int. Cl.: F04B 5/00, B05B 9/00, B05B 12/00, B05B 7/00

(54) **SPRAY SYSTEM PRESSURE AND RATIO CONTROL**
DRUCK- UND RATIOSTEUERUNG EINES SPRÜHSYSTEMS
SYSTÈME DE PULVÉRISATION ET COMMANDE DE RAPPORT

(30) Priority: 19.07.2013 US 201361856104 P
(43) Date of publication of application: 25.05.2016
(73) Proprietor: Graco Minnesota Inc., Minneapolis, MN 55413-1894 (US)
(72) Inventor: FEHR, David, L., Champlin, Minnesota 55316 (US); INGEBRAND, John, R., New Prague, Minnesota 56071 (US); SHAFFER, Jeffrey, U., Minneapolis, Minnesota 55418 (US)
(74) Representative: Miller Sturt Kenyon
(86) International application number: PCT/US2014/047219
(87) International publication number: WO 2015/010035

(56) References cited:
- EP-A1- 2 364 952
- FR-A1- 2 426 561
- FR-A1- 2 597 025
- JP-A- 2008 055 292
- US-A- 4 867 775
- US-A1- 2004 104 244
- US-A1- 2004 104 244
- US-A1- 2004 262 787
- US-A1- 2005 127 088
- US-A1- 2009 274 826
- US-A1- 2010 200 668
- US-A1- 2012 282 121

## Description

### BACKGROUND

The present invention relates generally to applicator systems that are used to spray fluids, such as paint, sealants, coatings, and the like. More particularly, the invention relates to pressure and flow ratio control for a multiple fluid spray system such as a two-component fluid spray system.

Some fluid applicators are designed to combine and spray two or more separate fluid components. A two-component system, for example, might have separate "A-side" and "B-side" fluid systems (e.g. pumps, reservoirs, and fluid lines) that carry different fluid components. These components are isolated until sprayed or otherwise applied, whereupon the components mix and chemically interact to form an application material. Two-component fluid spray systems are commonly used to apply epoxies, foams, and two-component paints. Paint systems, for example, may combine A-side paints with B-side catalyst materials. Common catalyst materials include isocyanates, polyesters, epoxies, and acrylics. Different paints or other A-side materials may require different B-side catalysts.

A- and B-side fluid systems typically comprise separate fluid sources (e.g. reservoirs or lines) that are pumped via separate pumps to a common sprayer head actuated by a human operator or an automated machine process. Many two-component spray systems use gear pumps to provide adequate spray flow. Required spray pressures vary as a function of material and application, and desired flow rates of A- and B-side fluids often differ. Paints and catalysts intended to be combined in a 10-to-1 ratio, for instance, will necessitate A- side pump displacement ten times greater than B-side pump displacement.

In many applications a single spray system may be used to sequentially apply several different materials (e.g. different paints). Before new fluid materials can be pumped and sprayed, old materials must be flushed from pumping systems to prevent contamination. Flushing can involve significant wasted material, and pump pressures and flow rates may vary as pumping begins with a new material.

US 2004/104244 discloses a system for metering and dispensing single and plural component liquids and solids. The dispensing system has a microprocessor-based control system and progressive cavity pumps which provide control of component ratios, shot sizes, flow rates and dispense durations. The system has feedback components for controlling the pressure, flow rates, fluid levels and amounts of fluids dispensed. Where a valved nozzle is used, the pressure in the flow system is used to control the pumps rather than the valve. Such a system may be used as a sprayer with compressed air added. Maintenance of a steady state in the system is accomplished with back and forth movement of the pump, with compensation for pressure changes. Absolute rotational position of the pump can be monitored when a set pressure is maintained, to diagnose system conditions. A mold charging system uses pressure to control the pumps which are cycled on and off to avoid overpressurizing the mold. The rate of pressure increase is used to control the rate of flow from the pumps as the mold approaches completion of the charge, again to avoid overpressurizing the mold.

### SUMMARY

A first aspect of the invention provides a spray system as defined in claim 1.

A second aspect of the invention provides a control method as defined in claim 10.

### BRIEF DESCRIPTION OF THE DRAWINGS

FIG. 1 is a schematic diagram of a spray system
FIG. 2 is a method flowchart illustrating a method of pumping fluid pressure and ratio control for the spray system of FIG. 1
FIG. 3 is an example plot of pressure and pump speed as a function of time, illustrating the operation of the method of FIG. 2.

### DETAILED DESCRIPTION

The present invention is a system and method for controlling spray pressure and flow rate of A- and B-side fluid components in a two-component spray system such as a paint, epoxy, or foam sprayer.

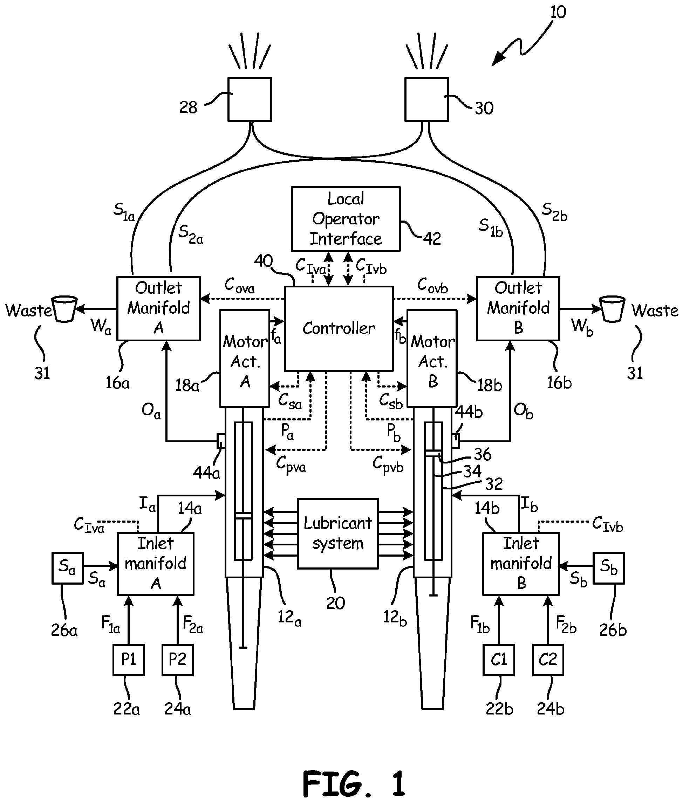

FIG. 1 is a schematic diagram of spray system 10, a two-side spray system with an A-side and a B-side configured to carry separate fluid components that are only combined when sprayed. Spray system 10 can, for example, combine an A-side paint with a B-side catalyst (e.g. a polyurethane, acrylic, polyester, or epoxy) at the moment of spraying. Although spray system 10 will be discussed hereinafter primarily as a system for spraying paint, the present invention can analogously be applied to sprayers for foam, adhesive, and other materials. Many components of spray system 10 are present in parallel on both A- and B-sides of the system. For clarity, A-side components are labeled with an "a" subscript, while B-side components are labeled with a "b" subscript. Hereinafter, reference numbers without subscript will be used to refer generically to elements found in parallel on both A- and B-sides of spray system 10, and to single elements common to both sides, while particular A- or B-side counterparts will be denoted with "a" or "b" subscripts, as appropriate. "Pump 12a" and "pump 12b," for example, are specific elements of the A- and B-side subsystems of spray system, respectively. Description related to "pump 12" (without subscript) refers generically to pump.

Spray system 10 includes A- and B-side pumps 12 that pump fluid from inlet manifolds 14 via inlet lines Iₐ and I_{b} to outlet manifolds 16 via outlet lines Oₐ and O_{b}. In the depicted embodiment, pumps 12 are double-action reciprocating cylinder pumps driven by motorized actuators 18, with seals lubricated by lubricant system 20. Motorized actuators 18 can, for example, be linear DC step motors. Lubricant system 20 includes at least one lubricant reservoir and fluid routing lines suited to carry lubricant from lubricant system 20 to valve seals and other throat seals of pumps 12. Although lubricant system 20 is illustrated as a unitary system, some embodiments of spray system 10 can use separate A- and B-side lubricant systems, e.g with different lubricants.

Inlet and outlet manifolds 14 and 16, respectively, are valved manifolds that selectively couple pumps 12 to a plurality of fluid sources and outputs. Inlet and outlet manifolds 14 and 16 allow spray system 10 to switch between a plurality of connected fluids without any need to disconnect or reconnect fluid lines. Although each outlet manifold 16 is depicted with three outlets and each inlet manifold 14 is depicted with three inlets, any number of inlets and outlets can be used. Under ordinary operating conditions, valving in manifolds 14 and 16 allows only one input or output line to be open at a time. In some embodiments, inlet and outlet manifolds 14 and 16 are controlled electronically, as discussed in greater detail below with respect to controller 40. In other embodiments, inlet and outlet manifolds 14 and 16 can be actuated manually. Some embodiments of spray system 10 can allow for both electronic and manual valve actuation of inlet and outlet manifolds 14 and 16.

In the depicted embodiment, inlet manifolds 14 selectively connect pumps 12 to primary fluid sources 22 and 24 via fluid lines F₁ and F₂, respectively, and to solvent sources 26 via solvent lines S. Primary fluid sources 22a and 24a can, for example, be first and second paints PI and P2, while primary fluid sources 22b and 24b can, for example, be first and second catalyst fluids C1 and C2. Solvent sources 26a and 26b can draw upon a common reservoir of solvent material, or can use different solvent materials.

In the depicted embodiment, outlet manifolds 16 similarly selectively connect pumps 12 to sprayers 28 and 30 via spray lines S₁ and S_{2,}, and to waste fluid dump 31 via waste lines W. Waste fluid dump 31 accepts waste paint, catalyst, and solvent flushed from spray system 10 (e.g. when switching from first paint PI and first catalyst fluid C1 to second paint P2 and second catalyst fluid C2). Sprayers 28 and 30 each accept spray lines from both A-side and B-side outlet manifolds 16. Sprayer 28, for example, accepts spray line S₁ₐ from A-side outlet manifold 16ₐ and spray line S_{1b} from B-side outlet manifold 16_{b}. Although only two sprayers 28 and 30 are depicted in FIG. 1, any number of separate sprayers can be used. Each sprayer can be dedicated to a single spray fluid combination (e.g. of paint and catalyst), to avoid mixture or fouling of different fluids. Accordingly, embodiments with additional fluid sources advantageously include additional sprayers, as well. Alternatively, sprayers need not be devoted to particular fluid combinations, but can be used sequentially for multiple different fluid combinations, if washed between spray sessions with different fluids. Sprayers 28 and 30 can, for example, be user-triggered spray guns or machine-actuated automatic sprayers.

In some embodiments, primary fluid sources 22 and 24 and solvent sources 26 are pre-pressurized sources capable of supplying at least 50% of output pressure of pumps 12. Pre-pressurized sources alleviate pumping load on motorized actuators 18, such that pumps 12 need only supply less than 50% (per the previously stated case) of output pressure. Sources 22, 24, and 26 can include dedicated pumps for pre-pressurizing fluids.

In the depicted embodiment, pumps 12 are metered linear pumps with dosing cylinders 32 that carry displacement rods 34. Displacement rods 34 are driven by motorized actuators 18, and both situate and drive plungers 36. In some embodiments, dosing cylinders 32, displacements rods 34, and plungers 36 may be balanced in working surface area so as to receive equal pressure from pre-pressurized sources (e.g. 22, 24) on up- and down-strokes.

The motor speed of motorized actuators 18 is variable, and determines the displacement of pumps 12. Displacement rods 34 extend into rod reservoirs 38, which can in some embodiments be flooded with lubricant from lubricant system 20. Pumps 12 each have inlet and outlet valves that actuate between up- and down-strokes of displacement rods 34 to direct fluid above or below plungers 36.

Spray system 10 is controlled by controller 40. Controller 40 is a computing device such as a microprocessor or collection of microprocessors with associated memory and local operator interface 42. Local operator interface 42 is a user interface device with, e.g. a screen, keys, dials, and/or gauges. In some embodiments of the present invention, local operator interface 42 can be a wired or wireless connection for a user operated tablet or computer. In other embodiments, local operator interface 42 can be an integrated interface configured to accept direct user input and provide diagnostic and operational data directly to a user. Local operator interface 42 can, for example, enable a user to input target ratios of A- and B-side fluid flow for each combination of A- and B-side fluids, and target output pressure. Local operator interface 42 can also provide users with diagnostic information including but not limited to failure identifications (e.g. for clogging or leakage), spray statistics (e.g. fluid volume sprayed or remaining), and status indications (e.g. "cleaning," "spraying," or "offline"). In some embodiments, controller 40 may include a database of known or previous configurations (e.g. target ratios and/or pressures for particular materials), such that a user at local operator interface 42 need only select a configuration from several options.

Controller 40 controls motorized actuators 18 via motor speed control signals cₛ and controls pump valving of pumps 12 via pump valve control signals c_{PV}. Controller 40 synchronizes valve actuation of pumps 12 with pump changeover to minimize downtime as plungers 36 reaches the top or bottom of their travel distances within dosing cylinder 32. In some embodiments, controller 40 may also control valving of inlet manifolds 14 and outlet manifolds 16 via inlet valve control signals c_{IV} and outlet valve control signals c_{OV}, respectively. Controller 40 receives sensed pressure values Pₐ and P_{b} from pressure sensors 44a and 44b, respectively, and receives encoder feedback data *f*ₐ and *f*_{b} reflecting motor states from motorized actuators 18a and 18b, respectively.

Pumping system 10 provides substantially uniform and continuous spray pressure through pump changeovers at specified pressures and material ratios. Pumping system 10 enables clean and efficient pumping and fluid switching without risk of fluid contamination, and without need for lengthy downtimes or large volume use of washing solvents.

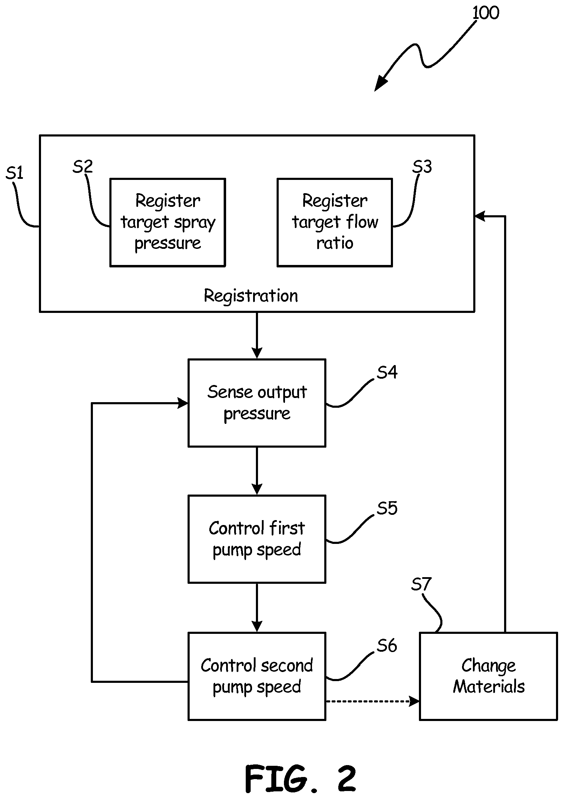

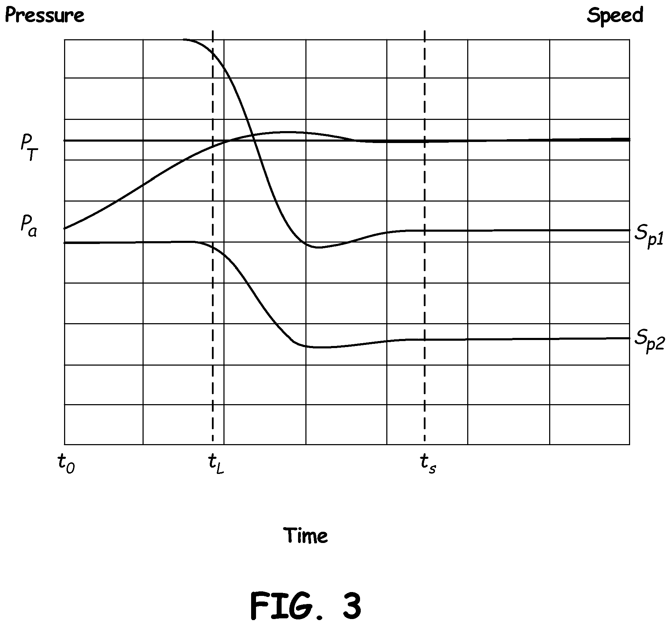

FIG. 2 is a method flowchart illustrating method 100. Method 100 is a control method for spray system 10 by which fluid pressure and flow rate are regulated. FIG. 3 is an example plot of A-side pump speed S_{A}, B-side pump speed S_{B}, and target pressure P_{T} as a function of time, according to the operation of method 100.

First, configuration parameters are registered. (Step S1). Configuration parameters include target spray pressure P_{T} and target flow ratio FR_{T}, which may be set collectively or via separate steps S2 and S3, respectively, e.g. where P_{T} has changed but target flow ratio FR_{T} remains unchanged, or vice versa. Spray pressure P_{T} and target flow ratio FR_{T} may be set manually by a human user through local operator interface 42, selected from a database of controller 40, or imported from a peripheral device.

Once configuration parameters have been registered, normal spray operation can begin, with pumps 12 pumping fluids from inlet manifolds 14 to outlet manifolds 16 and on to sprayers 28 or 30, as described above with respect to FIG. 1. Controller 40 controls pump speeds of pumps 12a and 12b based on sensed and target pressure. Although the A-side fluid system of spray system 10 is hereinafter described as the "primary" side and the B-side fluid system as the "secondary" side, alternative embodiments can reverse this order. During normal spray operation, pressure sensors 44a and 44b sense outlet pressures of pumps 12a and 12b, respectively. (Step S4). A primary pressure corresponding to A-side outlet pressure Pₐ drives a proportional-integral-derivative control loop at controller 40 to produce speed control signal c_{Sa} governing motorized actuator 18a, such that A-side outlet pressure Pₐ is constrained towards primary pumping speed S_{P1} to produce target pressure P_{T}. (Step S5). Controller 40 produces speed control signal c_{Sb} governing motorized actuator 18b by multiplicatively scaling speed control signal c_{Sa} by target flow ratio FR_{T} to produce secondary pumping speed S_{P2}. (Step S6). Since pump displacement is substantially proportional to pumping speed, scaling the speed of motorized actuator 18b after the speed of motorized actuator 18a ensures a uniform material ratio reaches sprayer 28 or 30 at an A-side outlet pressure Pₐ that tends towards target pressure P_{T} over time. B-side outlet pressure P_{b} is not used to control motor speeds, but can be sensed for diagnostic purposes.

Controller 40 operates in a feedback loop with commanded pumping speed S_{P1} affecting sensed A-side outlet pressure Pₐ, and sensed A-side outlet pressure Pₐ determining speed control signals c_{Sa} and c_{Sb} via the aforementioned proportional-integral-derivative control loop. In the event of a pumping halt, e.g. to change materials, method 100 may restart at step S1 for new target spray pressure and flow ratios. (Step S7). Target flow ratios and spray pressures are material dependent. Different combinations of paint and catalyst, for example, may use paint and catalyst at varying ratios. Any material ratio appropriate to the combination of fluids can be used. In addition, differences in viscosity and environmental temperature may necessitate different target spray pressures P_{T}.

FIG. 3 provides an example plot of outlet pressure Pₐ as compared to target spray pressure P_{T}, and of primary and secondary pumping speeds S_{P1} and S_{P2}, respectively, as a function of time. As illustrated in FIG. 3, outlet pressure Pₐ tends substantially linearly from an initial time t₀ corresponding to the start of spraying or a material switchover towards target spray pressure P_{T} until close to target spray pressure P_{T}, whereupon pumping speeds S_{P1} and S_{P2} begin to drop and outlet pressure Pₐ begins to level off at time t_{L}. At a later time t_{S}, pumping speeds S_{P1} and S_{P2} and outlet pressure Pₐ reach a substantially steady state with outlet pressure Pₐ substantially equal to target pressure P_{T}.

Method 100 and spray system 10 rapidly adjust pumping speeds to achieve uniform desired pressures and material flow ratios through spraying events, pump changeovers, and machine startup/shutdown events.

### Discussion of Possible Embodiments

The following are non-exclusive descriptions of possible embodiments of the present invention.

A spray system comprising: a first fluid source configured to provide a first fluid; a second fluid source configured to provide a second fluid; a sprayer configured to combine and spray the first and second fluids; a first pump configured to pump the first fluid at a variable first pumping speed from the first fluid source to the sprayer; a second pump configured to pump the second fluid at a variable second pumping speed from the second fluid source to the sprayer; a first pressure sensor disposed to sense a first output pressure of the first pump; and a controller configured to control the first pumping speed via a proportional-integral-derivative loop using the sensed first output pressure and a target spray pressure, and configured to command the second pumping speed to the first pumping speed times a target primary-to-secondary spray component flow ratio

The spray system of the preceding paragraph can optionally include, additionally and/or alternatively, any one or more of the following features, configurations and/or additional components:
A further embodiment of the foregoing spray system, wherein the first and second fluid sources are pre-pressurized.
A further embodiment of the foregoing spray system, wherein the first and second fluid sources are pre-pressurized to at least 50% of the target pressure.
A further embodiment of the foregoing spray system, further comprising a local operator interface configured to receive the target spray pressure and the target primary-to-secondary spray component flow ratio from a user.
A further embodiment of the foregoing spray system, wherein the first fluid is a paint.
A further embodiment of the foregoing spray system, wherein the second fluid is a paint catalyst.
A further embodiment of the foregoing spray system, wherein the first fluid source is connected to the first pump via a pump manifold disposed to accept multiple source lines.
A further embodiment of the foregoing spray system, wherein the first and second pumps are positive displacement pumps.
A further embodiment of the foregoing spray system, wherein the first and second pumps are balanced proportioning pumps.
A control method for a two-component spray system having first and second pumps for separate fluid components, the method comprising: registering a target spray pressure; registering a material-specific target primary-to-secondary spray component flow ratio; sensing an output pressure of the first pump; controlling the first pump to a first speed set via a proportional-integral-derivative loop using the sensed output pressure and the target spray pressure; and controlling the second pump to a second speed equal to the first speed multiplied by the target primary-to-secondary spray component flow ratio.

The control method of the preceding paragraph can optionally include, additionally and/or alternatively, any one or more of the following features, configurations and/or additional components:
A further embodiment of the foregoing control method, wherein registering the target pressure comprises receiving a user input.
A further embodiment of the foregoing control method, wherein registering the target pressure comprises receiving a user selection from among a plurality of preset pressure options.
A further embodiment of the foregoing control method, wherein the user input specifies the fluid components.
A further embodiment of the foregoing control method, further comprising identifying a failure condition in response to a persistent difference greater than a threshold value between the sensed output pressure and the target spray pressure.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A spray system (10) comprising:
a first fluid source (22a, 24a) configured to provide a first fluid;
a second fluid source (22b, 24b) configured to provide a second fluid;
a sprayer (28, 30) configured to combine and spray the first and second fluids;
a first pump (12a) configured to pump the first fluid at a variable first pumping speed from the first fluid source (22a, 24a) to the sprayer; (28, 30);
a second pump (12b) configured to pump the second fluid at a variable second pumping speed from the second fluid source (22b, 24b) to the sprayers (28, 30);
a first pressure sensor (44a) disposed to sense a first output pressure of the first pump (12a); and **characterized by**
a controller (40) configured to control the first pumping speed via a proportional-integral-derivative loop using the sensed first output pressure and a target spray pressure, and configured to command the second pumping speed to the first pumping speed times a target primary-to-secondary spray component flow ratio.

2. The spray system (10) of claim 1, wherein the first and second fluid sources (22, 24) are pre-pressurized.

3. The spray system (10) of claim 2, wherein the first and second fluid sources (22, 24) are pre-pressurized to at least 50% of the target pressure.

4. The spray system (10) of claim 1, further comprising a local operator interface (42) configured to receive the target spray pressure and the target primary-to-secondary spray component flow ratio from a user.

5. The spray system (10) of claim 1, wherein the first fluid comprises a paint.

6. The spray system (10) of claim 1, wherein the second fluid comprises a paint catalyst.

7. The spray system (10) of claim 1, wherein the first fluid source (22a, 24a) is connected to the first pump (12a) via a pump manifold (14a) disposed to accept multiple source lines.

8. The spray system (10) of claim 1, wherein the first and second pumps (12a, 12b) are positive displacement pumps.

9. The spray system (10) of claim 8, wherein the first and second pumps (12a. 12b) are balanced proportioning pumps.

10. A control method for a two-component spray system (10) having first and second pumps (12a, 12b) for separate fluid components, the method comprising:
registering a target spray pressure;
registering a material-specific target primary-to-secondary spray component flow ratio;
sensing an output pressure of the first pump (12a); **characterized by** instructing the first pump (12a) to deliver a first fluid at a first speed set via a proportional-integral-derivative loop using the sensed output pressure and the target spray pressure; and
instructing the second pump (12b) to deliver a second fluid at a second speed equal to the first speed multiplied by the target primary-to-secondary spray component flow ratio.

11. The control method of claim 10, wherein registering the target pressure comprises receiving a user input.

12. The control method of claim 11, wherein registering the target pressure comprises receiving a user selection from among a plurality of preset pressure options.

13. The control method of claim 11, wherein the user input specifies the fluid components.

14. The control method of claim 10, further comprising identifying a failure condition in response to a persistent difference greater than a threshold value between the sensed output pressure and the target spray pressure.

## Patentansprüche

1. Sprühsystem (10), das Folgendes umfasst:
eine erste Fluidquelle (22a, 24a), die dafür konfiguriert ist, ein erstes Fluid bereitzustellen;
eine zweite Fluidquelle (22b, 24b), die dafür konfiguriert ist, ein zweites Fluid bereitzustellen;
eine Sprühvorrichtung (28, 30), die dafür konfiguriert ist, das erste und das zweite Fluid zu kombinieren und zu versprühen;
eine erste Pumpe (12a), die dafür konfiguriert ist, das erste Fluid mit einer variablen ersten Pumpgeschwindigkeit von der ersten Fluidquelle (22a, 24a) zu der Sprühvorrichtung (28, 30) zu pumpen;
eine zweite Pumpe (12b), die dafür konfiguriert ist, das zweite Fluid mit einer variablen zweiten Pumpgeschwindigkeit von der zweiten Fluidquelle (22b, 24b) zu der Sprühvorrichtung (28, 30) zu pumpen;
einen ersten Drucksensor (44a), der dafür ausgelegt ist, einen ersten Ausgangsdruck der ersten Pumpe (12a) abzufühlen; und **gekennzeichnet durch**
eine Steuereinheit (40), die dafür konfiguriert ist, die erste Pumpgeschwindigkeit über eine Proportional-Integral-Differenzial-Schleife unter Verwendung des abgefühlten ersten Ausgangsdrucks und eines Soll-Sprühdrucks zu steuern, und dafür konfiguriert ist, die zweite Pumpgeschwindigkeit zu der ersten Pumpgeschwindigkeit, multipliziert mit einem Soll-Primär-zu-Sekundär-Sprühkomponenten-Strömungsverhältnis, zu befehlen.

2. Sprühsystem (10) nach Anspruch 1, wobei die erste und die zweite Fluidquelle (22, 24) mit einem Druck vorbeaufschlagt werden.

3. Sprühsystem (10) nach Anspruch 2, wobei die erste und die zweite Fluidquelle (22, 24) mit einem Druck auf mindestens 50 % des Soll-Drucks vorbeaufschlagt werden.

4. Sprühsystem (10) nach Anspruch 1, das des Weiteren eine lokale Bedienerschnittstelle (42) umfasst, die dafür konfiguriert ist, den Soll-Sprühdruck und das Soll-Primär-zu-Sekundär-Sprühkomponenten-Strömungsverhältnis von einem Nutzer zu empfangen.

5. Sprühsystem (10) nach Anspruch 1, wobei das erste Fluid eine Farbe umfasst.

6. Sprühsystem (10) nach Anspruch 1, wobei das zweite Fluid einen Farbkatalysator umfasst.

7. Sprühsystem (10) nach Anspruch 1, wobei die erste Fluidquelle (22a, 24a) mit der ersten Pumpe (12a) über einen Pumpenverteiler (14a) verbunden ist, der dafür ausgelegt ist, mehrere Quellenleitungen zu empfangen.

8. Sprühsystem (10) nach Anspruch 1, wobei die erste und die zweite Pumpe (12a, 12b) Verdrängungs-Hubkolbenpumpen sind.

9. Sprühsystem (10) nach Anspruch 8, wobei die erste und die zweite Pumpe (12a, 12b) symmetrische Zumesspumpen sind.

10. Steuerungsverfahren für ein Zweikomponenten-Sprühsystem (10), das eine erste und eine zweite Pumpe (12a, 12b) für separate Fluidkomponenten aufweist, wobei das Verfahren Folgendes umfasst:
Registrieren eines Soll-Sprühdrucks;
Registrieren eines materialspezifischen Soll-Primärzu-Sekundär-Sprühkomponenten-Strömungsverhältnisses;
Abfühlen eines Ausgangsdrucks der ersten Pumpe (12a); **gekennzeichnet durch**
Instruieren der ersten Pumpe (12a), ein erstes Fluid mit einer ersten Geschwindigkeit zuzuführen, die über eine Proportional-Integral-Differenzial-Schleife unter Verwendung des abgefühlten Ausgangsdrucks und des Soll-Sprühdrucks eingestellt wird; und
Instruieren der zweite Pumpe (12b), ein zweites Fluid mit einer zweiten Geschwindigkeit zuzuführen, die gleich der ersten Geschwindigkeit, multipliziert mit dem Soll-Primär-zu-Sekundär-Sprühkomponenten-Strömungsverhältnis, ist.

11. Steuerungsverfahren nach Anspruch 10, wobei das Registrieren des Soll-Drucks das Empfangen einer Nutzereingabe umfasst.

12. Steuerungsverfahren nach Anspruch 11, wobei das Registrieren des Soll-Drucks das Empfangen einer Nutzerauswahl unter mehreren voreingestellten Druckoptionen umfasst.

13. Steuerungsverfahren nach Anspruch 11, wobei die Nutzereingabe die Fluidkomponenten spezifiziert.

14. Steuerungsverfahren nach Anspruch 10, das des Weiteren das Identifizieren eines Ausfallzustands umfasst, falls eine Differenz zwischen dem abgefühlten Ausgangsdruck und dem Soll-Sprühdruck dauerhaft größer als ein Schwellenwert ist.

## Revendications

1. Système de pulvérisation (10) comprenant :
une première source de fluide (22a, 24a) configurée pour fournir un premier fluide ;
une seconde source de fluide (22b, 24b) configurée pour fournir un second fluide ;
un pulvérisateur (28, 30) configuré pour combiner et pulvériser le premier et le second fluide ;
une première pompe (12a) configurée pour pomper le premier fluide à une première vitesse de pompage variable de la première source de fluide (22a, 24a) vers le pulvérisateur (28, 30) ;
une seconde pompe (12b) configurée pour pomper le second fluide à une seconde vitesse de pompage variable de la seconde source de fluide (22b, 24b) vers le pulvérisateur (28, 30) ;
un premier capteur de pression (44a) disposé afin de détecter une première pression de sortie de la première pompe (12a) ; et **caractérisé par**
un contrôleur (40) configuré pour commander la première vitesse de pompage via une boucle proportionnelle-intégrale-dérivée en utilisant la première pression de sortie détectée et une pression de pulvérisation cible, et configuré pour commander la seconde vitesse de pompage sur la première vitesse de pompage fois un rapport de débit de composant de pulvérisation primaire à secondaire cible.

2. Système de pulvérisation (10) selon la revendication 1, dans lequel la première et la seconde source de fluide (22, 24) sont pré-pressurisées.

3. Système de pulvérisation (10) selon la revendication 2, dans lequel la première et la seconde source de fluide (22, 24) sont pré-pressurisées à au moins 50 % de la pression cible.

4. Système de pulvérisation (10) selon la revendication 1, comprenant en outre une interface d'opérateur local (42) configurée pour recevoir la pression de pulvérisation cible et le rapport de débit de composant de pulvérisation primaire à secondaire cible provenant d'un utilisateur.

5. Système de pulvérisation (10) selon la revendication 1, dans lequel le premier fluide comprend une peinture.

6. Système de pulvérisation (10) selon la revendication 1, dans lequel le second fluide comprend un catalyseur de peinture.

7. Système de pulvérisation (10) selon la revendication 1, dans lequel la première source de fluide (22a, 24a) est raccordée à la première pompe (12a) via un collecteur de pompe (14a) disposé afin d'accepter des lignes de sources multiples.

8. Système de pulvérisation (10) selon la revendication 1, dans lequel la première et la seconde pompe (12a, 12b) sont des pompes à déplacement positif.

9. Système de pulvérisation (10) selon la revendication 8, dans lequel la première et la seconde pompe (12a, 12b) sont des pompes de dosage équilibrées.

10. Procédé de commande pour un système de pulvérisation à deux composants (10) ayant une première et seconde pompe (12a, 12b) pour des composants de fluide séparés, le procédé comprenant de :
enregistrer une pression de pulvérisation cible ;
enregistrer un rapport de débit de composant de pulvérisation primaire à secondaire cible spécifique au matériau ;
détecter une pression de sortie de la première pompe (12a) ; **caractérisé par**
donner instruction à la première pompe (12a) de délivrer un premier fluide à une première vitesse réglée via une boucle proportionnelle-intégrale-dérivée en utilisant la boucle de pression de sortie détectée et la pression de pulvérisation cible ; et
donner instruction à la seconde pompe (12b) de délivrer un second fluide à une seconde vitesse égale à la première vitesse multipliée par le rapport de débit de composant de pulvérisation primaire à secondaire cible.

11. Procédé de commande selon la revendication 10, dans lequel enregistrer la pression cible comprend de recevoir une saisie d'utilisateur.

12. Procédé de commande selon la revendication 11, dans lequel enregistrer la pression cible comprend de recevoir une sélection d'utilisateur parmi une pluralité d'options de pression préréglées.

13. Procédé de commande selon la revendication 11, dans lequel la saisie d'utilisateur spécifie les composants de fluide.

14. Procédé de commande selon la revendication 10, comprenant en outre d'identifier une condition de panne en réponse à une différence persistante supérieure à une valeur seuil entre la pression de sortie détectée et la pression de pulvérisation cible.
